**Europäisches Patentamt**

**European Patent Office**

**Office européen des brevets**

(19)

(11) **EP 1 021 002 A1**

(12) **EUROPEAN PATENT APPLICATION**

(43) Date of publication:
**19.07.2000 Bulletin 2000/29**

(51) Int Cl.⁷: **H04B 7/185**, H04B 7/08

(21) Application number: **99300191.6**

(22) Date of filing: **12.01.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Grayson, Mark**<br>  **Chiswick, London W4 2QT (GB)**<br>• **Mullins, Dennis Roy**<br>  **London SE11 5UL (GB)** |
| (71) Applicant: **ICO Services Ltd.**<br>**London W6 9BN (GB)** | (74) Representative: **Read, Matthew Charles et al**<br>**Venner Shipley & Co.**<br>**20 Little Britain**<br>**London EC1A 7DH (GB)** |

(54) **Link control for diversity operation**

(57) In a mobile satellite telecommunications system, diverse telecommunications paths are established between a user terminal UT 1 and a satellite access node SAN 1 via two earth orbiting satellites 3a, 3b. Link control is performed in order to compensate for Doppler shift and timing variations which occur due to orbital movement of the satellites. Data concerning the differential timing errors for TDMA bursts transmitted over the two paths from SAN 1 to UT 1 are determined at UT1 together with the differential Doppler shift between signals received over the two paths. The differential timing information and the differential Doppler shift information is encoded in to a slow access control channel associated with the traffic channel which passes back from UT1 to SAN 1. This data is used at SAN 1 in order to produce control parameter data which is transmitted back to the UT in order to control the offsets used by the UT to correct timing errors and Doppler shifts. The signal formats are usable in full, partial and switched diversity modes in which both or only one of the up and downlink paths are used.

Fig. 12

EP 1 021 002 A1

**Description**

This invention relates to link control for diversity operation in a mobile telecommunications system and has particular but not exclusive application to satellite telecommunications systems.

Terrestrial mobile telecommunications systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communications networks, ground stations are located at different sites around the world in order to communicate with the orbiting satellites and local PLMNs. In the ICO™ system and others, a visitor location register is associated with each of the satellite ground stations to register locally the individual user terminals. The visitor location registers communicate with a home location register for the satellite network.

The satellite constellation can be configured so that for any location of user terminal on the earth, more than one satellite is at an elevation of more than 10 degrees above the horizon and hence two satellites are usually available for communication concurrently with the user terminal. The availability of more than satellite permits so-called diversity operations in which a traffic logical channel can be transmitted between the ground and the user terminal concurrently via two satellites, in two paths, to mitigate effects of blockage and fading. Diversity operation is described in GB-A-2 293 725, EP-A-0 837 568 and PCT/US96/19429.

The length of two paths from the ground to the user terminal via the satellites differs substantially with time as a result of orbital movement of the satellites. Also, the satellite movement introduces a Doppler shift in the transmitted signals. Thus, link control needs to be carried out in order to pre-compensate the timing and frequency of the transmitted signals in order that they arrive in a synchronised pattern via the two paths, within a pre-defined frequency band, in order that detection can reliably occur for signals transmitted over both of the paths.

The present invention provides an improved way of performing link control for diversity operations.

According to the invention there is provided a method of performing link control in a mobile telecommunications system wherein telecommunications traffic is transmitted to a user terminal from a ground network in a traffic logical channel over diverse paths, comprising measuring at the user terminal a transmission parameter for the traffic channel transmitted thereto over one of the paths; measuring at the user terminal a transmission parameter for another of the paths, forming a transmission parameter signal containing transmission parameter data based on both of the transmission parameter measurements; transmitting the transmission parameter signal to the ground network through at least one of the paths; deriving at the ground network, control parameter data for controlling characteristics of signals transmitted by the user terminal for the two paths individually, as a function of the transmission parameter data received at the ground station in the transmission parameter signal; and transmitting the control parameter data to the user terminal from the ground network, whereby characteristics of signals transmitted by the user terminal in the two paths is controllable in accordance with the control parameter data.

The invention has particular application to a mobile satellite telecommunications system, in which the diverse paths for the logical channel pass between at least one ground station and the user terminal through different satellites.

The invention has the advantage that link control data pertinent to both of the paths provided in the transmission parameter signal, and transmitted back to the ground network for link control purposes via either one or both of the paths.

The system may be operable in a full diversity mode in which the ground network transmits a traffic logical channel in a downlink to the user terminal over both of the diverse paths and the user terminal communicates with the ground network through an uplink over the two diverse paths.

The system may also be operable in a partial diversity mode in which the ground network transmits the logical traffic channel in a downlink to the user terminal over both the diverse paths and the user terminal communicates with the ground network through an uplink over a selected one of the paths, the path for the uplink being selected in dependence upon the received signal quality of the downlink paths.

The diverse paths may be in different cellular areas served by the different satellites, with individual cell broadcast signals, and the system may be selectively operable in a switched diversity mode in which the ground network transmits the logical traffic channel in a downlink to the user terminal over one of the paths and switches the channel between the paths in response to data received from the user terminal as to the path of higher transmission quality. A measurement can be carried out at the user terminal of a transmission parameter for the traffic channel transmitted thereto over one of the paths and a measurement can be made at the user terminal of a transmission parameter for another of the paths which is not transmitting the logical channel, by measuring characteristics of the cell broadcast signal for the cell that includes the other path.

The logical traffic channel may be selectively transmissible to achieve relatively high and low levels of penetration at the user terminal, and the diverse paths may be in different cellular areas served by the different satellites with individual cell broadcast signals for achieving the relatively high level of penetration, and the method may include, when the downlink is configured to achieve the high level of penetration in one of the paths, measuring the parameters of the broadcast signal for the cell that includes the other of the paths.

The invention also includes a user terminal, such as a mobile telephone handset to provide link control in accordance with the previously described inventive method, together with a method of operating a handset to achieve the link control.

The invention also includes a method of operating a ground network to provide link control in accordance with the previously described method, together with a ground network configured to perform the method.

In order that the invention may be more fully understood an embodiment thereof will now be described by way of example with reference to the accompanying drawings, in which:

Figure 1 is a schematic diagram of a satellite telecommunications system together with a local, land-based mobile telecommunications system, in accordance with the invention;

Figure 2 is a schematic diagram of the spot beam pattern produced by one of the satellites on the earth;

Figure 3 illustrates schematically different beam types and their associated cellular areas and Z-arcs, from the pattern shown in Figure 2;

Figure 4 is a schematic frequency/time diagram illustrating time slots for the FDMA transmission scheme;

Figure 5 is a schematic block diagram of the circuits of satellite 3a;

Figure 6 is a schematic diagram of the cell pattern produced by the spot beams of satellites 3a, 3b;

Figure 7 is a schematic diagram of a mobile user terminal;

Figure 8 is a schematic block diagram of the circuits of the user terminal shown in Figure 7;

Figure 9 is a schematic block diagram of SBS 1 shown in Figure 1;

Figure 10 is a schematic diagram of TDMA signals transmitted from between the satellites and the user terminal;

Figure 11 is a schematic diagram showing the relationship of a transmission path between a user terminal and satellite, referenced to a Z-arc; and

Figure 12 is a schematic diagram of operations performed for forming a transmission parameter control signal to be transmitted from UT 1 to SAN 1 in order to perform link control in diversity operations.

## Overview of network

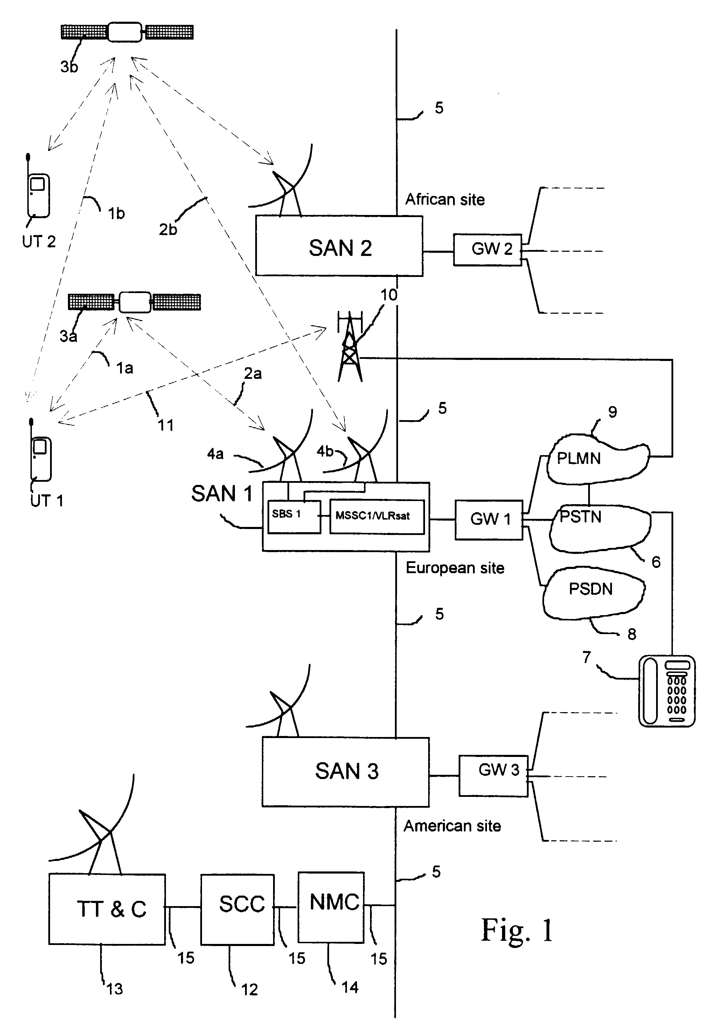

Referring to Figure 1, a schematic block diagram of a satellite mobile telecommunications network is shown corresponding to the ICO™ network. A mobile user terminal UT 1 in the form of a mobile telephone handset can communicate on a radio channel over a communication path 1a, 2a via an earth orbiting satellite 3a with a land-based satellite access node SAN 1. As shown schematically in Figure 1, SAN 1 is provided with a dish antenna arrangement that includes antenna 4a which can track the orbiting satellite 3a.

A number of the satellite access nodes SAN 1, 2, 3, etc are connected together to form a backbone network 5, which is connected through a number of gateways GW 1, 2, 3, etc to conventional land-based telephone networks. For example, the gateway GW 1, is connected to a land-based public switch telephone network (PSTN) 6, which permits connection to be made to a conventional telephone set 7. The gateway GW1 is additionally connected to a public switched data network (PSDN) 8 and a public land mobile network (PLMN) 9. Each of the gateways GW1, 2, 3 may comprise existing International Switching Centres (ISCs) or mobile switching centres (MSCs) of the type used in GSM mobile networks.

As shown in Figure 1, the handset UT 1 is a dual mode device which can also communicate with the conventional land-based mobile network PLMN 9, that is shown schematically to include a transceiver station 10 which establishes a duplex link 11 with the user terminal UT 1. In this example, the PLMN 9 is a GSM network. Thus the user can for example roam to the satellite network when out of range of the PLMN 9.

For a fuller understanding of GSM, reference is directed to the various GSM Recommendations issued by the European Telecommunications Institute (ETSI). Also reference is directed to "The GSM System for Mobile Communications" supra, for a more readable overview.

The satellite network is designed to provide world-wide coverage and the satellite 3a forms part of a constellation of satellites, which may be arranged in several orbits.

The satellites may be arranged in a MEO constellation, for example with an orbital radius of 10,355 km, although the invention is not restricted to a particular orbital radius. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing more than one concurrent communication path to the user terminal from a particular SAN. Additional satellites may be included in the constellation in order to provide redundancy.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only two of the dish antennas 4a, 4b for SAN 1 are shown in Figure 1 and only one dish is shown for the other SANs, in order to simplify the drawing. The dish antennas permit diverse communication paths to be established between the SANs and an individual user terminals via different satellites. In this example, the first communication path 1a, 2a is set up between dish antenna 4a of SAN 1 and user terminal UT 1 via satellite 3a, and a second communication path 1b, 2b is set up between dish antenna 4b of SAN 1 and user terminal UT 1 via satellite 3b, thus providing first and second diverse paths for concurrent communication of signal traffic between the satellite and the user terminal.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, demultiplexer and codecs, which will be described in more detail later. A mobile satellite switching centre MSSC 1 is coupled to SBS 1 and includes a satellite visitor location register $VLR_{SAT}$ 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW 1 so as to provide a connection to PLMN 9, PSDN 8 and PSTN 6. It will be understood that all the SANs are of similar construction with a respective $VLR_{SAT}$ to maintain a record of the subscribers registered, namely the identity of each user that is making use of the SAN 1 for signal communication.

In Figure 1, the SAN 2 is shown communicating with user terminal UT 2 via satellite 3b. For further details of the network, reference is directed to GB-A- 2 295 296 and EP-A-0869628.

The satellites 3a, 3b are in non geo-stationary orbits and comprise generally conventional hardware such as the Hughes HS 601. They may include features disclosed in GB-A-2 288 913.

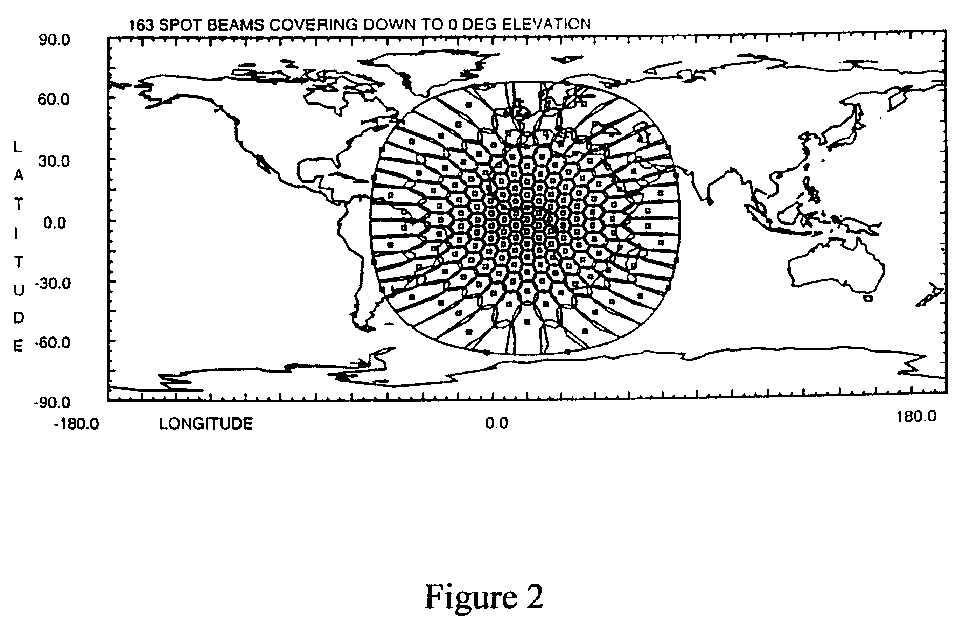

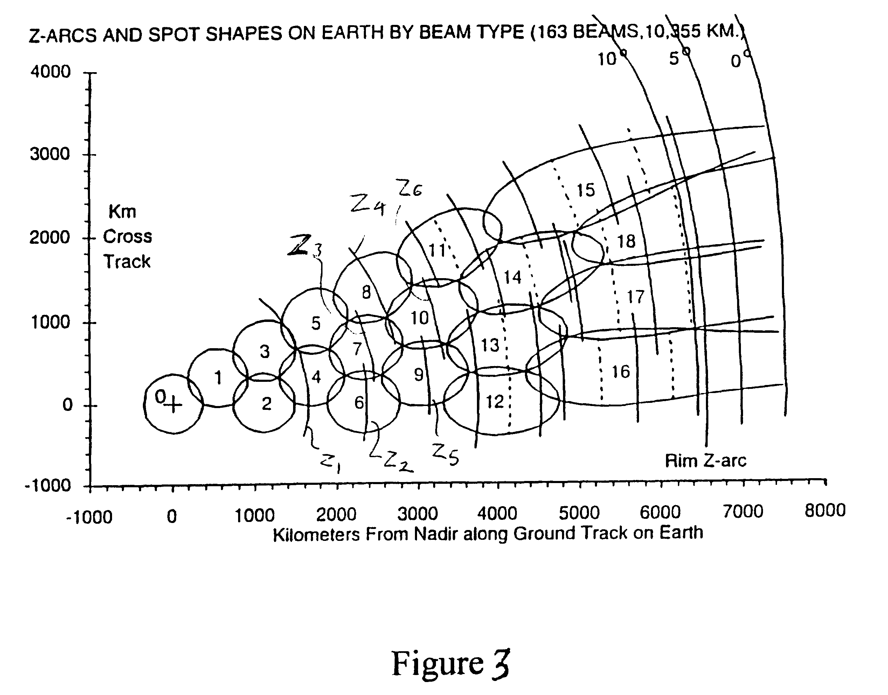

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. Referring to Figure 2, in the ICO™ satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3.

The satellites are controlled by means of a satellite control centre (SCC) 12 and a telemetry tracking and control station (TT&C) 13, which are connected to a network management centre (NMC) 14 through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

## Channel Configuration

During a telephone call, each of the user terminals communicates with a respective SAN via the satellites. A full duplex communication path is provided between the UT and the SAN. As referred to herein, communication from the SAN to the UT via the satellite is referred to as a "downlink", and communication directed from the UT via the satellite to the SAN is referred to as an "uplink". As will be explained in more detail hereinafter, the signals may travel over diverse paths between UT 1 and SAN 1 via satellite 3a or 3b or both of them concurrently.

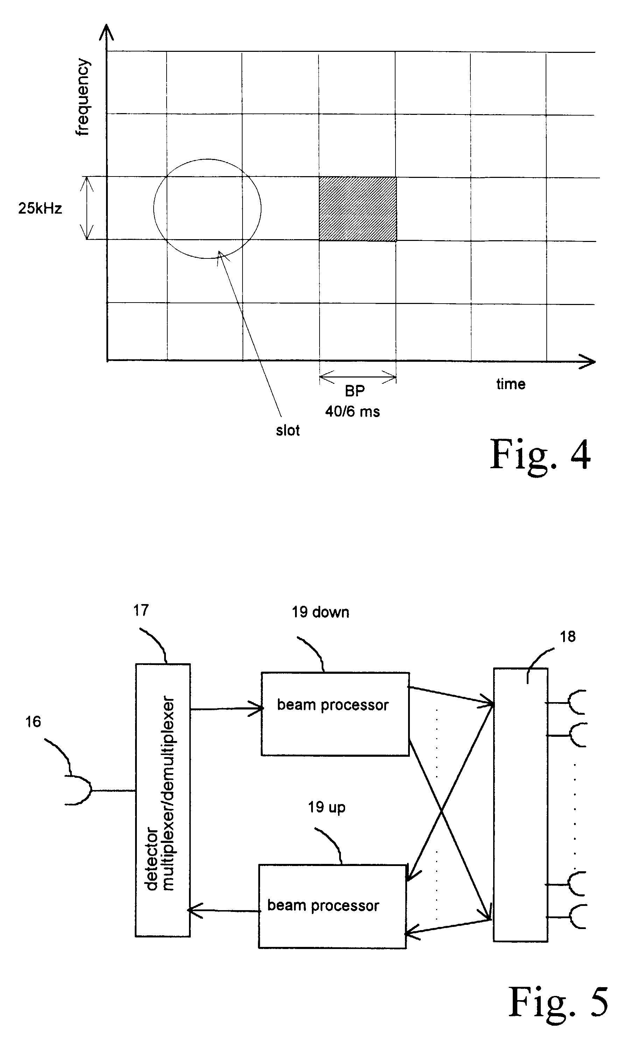

The general configuration of the transmitted signals is similar in some respects to those used for conventional GSM transmissions in a PLMN and makes use of a frequency diverse time division multiple access (TDMA) scheme. For speech transmission, data is sent on a traffic channel TCH. Each TCH is provided with an associated slow-rate control channel or SACCH. The configuration of these channels in the TDMA scheme will now be described in more detail. The basic unit of transmission between the SAN and UT is a series of about 100 modulated digital symbols, which is referred to as a burst. Bursts each have a finite duration and occupy a finite part of the radio spectrum. Thus, they are sent in time and frequency windows which are referred to as slots. The slots are positioned e.g. every 25kHz and recur in time every 40/6 ms (6.667ms). The duration of each slot is referred to as a burst period or BP. A graphical representation of a slot in the time and frequency domain is shown in Figure 4.

Each TCH consists of one slot every 6 BP and comprises a cycle of 25 slots. 24 of the 25 slots are used to transmit TCH data, and one slot is vacant. The SACCH is multiplexed over 12 consecutive slots. Two SACCH blocks are transmitted for every 25 slot cycle.

It will be appreciated that with this configuration, 6 TCHs can be interleaved due to the fact that each TCH consists of a slot every 6 BP. The resulting interleaved structure thus provides a 40 ms frame of 6 TCHs every 6 BP.

In addition to the channels TCH/SACCH for the individual UTs, a downlink broadcast control channel BCCH is broadcast from each satellite to all UTs within a particular cell. The BCCH provides information which identifies the cell to the UT, which is received by the UT in idle mode i.e. when no call is being made. As each cell has is own BCCH, the relative signal strengths of the BCCHs at the UT can be used to determine which cell is to be used for TCH/SACCH communication with the UT. Other system information may be transmitted to the UTs of a particular cell in the BCCH in a similar manner to GSM. The BCCH message consists of a number e.g. 4 slots equally spaced every 100 BP.

A common downlink paging logical channel PCH is provided for each cell. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH may consist of 1 to 10 slots every 25 BP and the AGCH may consist of e.g. 2, 4, 6, 8, 10 or 12 slots every 25 BP.

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

The SAN 1 to satellite 3a, 3b uplinks are located in a frequency band in the region of 5 GHz and the corresponding downlinks are in the region of 7 GHz. The satellite 3a, 3b to UT 1 downlinks are in the region of 2.1 GHz and the corresponding uplinks are in the region of 1.9 GHz, although the invention is not restricted to these frequencies. In this example, the individual TCH/SACCHs and BCCHs are assigned constant individual 25Kz wide frequency bands to provide a TDMA slot sequence as explained with reference to Figure 4.

## Satellite

A schematic diagram of the major signal processing components of each satellite is given in Figure 5. Signals transmitted from one of the SANs are received by antenna 16 and directed to a detector/multiplexer/de-multiplexer circuit 17. It will be understood that the signal transmitted from the SAN to the satellite contains a large number of TCH/SACCHs that are to be directed to individual UTs by the satellite. To this end, the satellite includes an array 18 of a plurality (for example 163) of antennas that produce individual spot beams that correspond to a cellular configuration as previously described. A beam forming processor circuitry configuration $19_{down}$ receives the various TCH/SACCHs that are de-multiplexed by circuit 17 and assembles them into multiplexed signals directed on 163 outputs to the spot beam antennas 18.

For signals on the uplink from the individual UTs to the SAN, the various transmissions are received by the spot beam antennas 18 and directed to processing circuitry $19_{up}$ which combines the various channels and passes them to the multiplexer configuration in circuit 17 for transmission through the antenna 16 to the SAN. It will be understood that the foregoing description of the satellite circuitry is schematic and for further details, reference is directed to GB-A-2 288 913 supra.

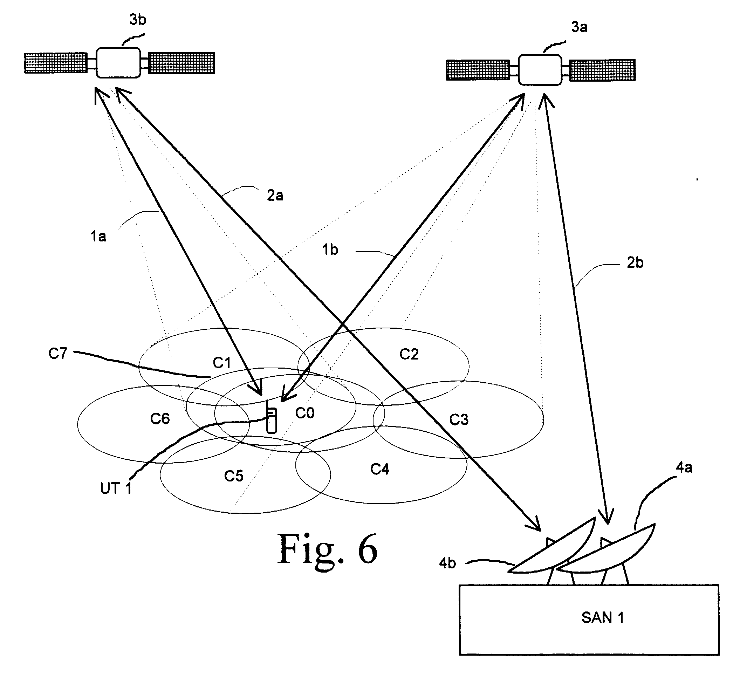

An example of cells C0 - C6 produced by the footprints of seven of the spot beams from antenna 18 of satellite 3a is shown in Figure 6. Also, one of the spot beams from satellite 3b is shown, which produces cell C7. The other beam footprints are omitted for purposes of clarity. The diverse communication paths between SAN 1 and UT 1 are shown. As previously explained, one path 1a, 2a extends between antenna 4a and UT 1 via satellite 3a. The other path 1b, 2b extends between antenna 4b and UT 1 via satellite 3b. These diverse paths make use of cells C0 and C7 of the satellites 3a and 3b.

### User terminal (UT 1)

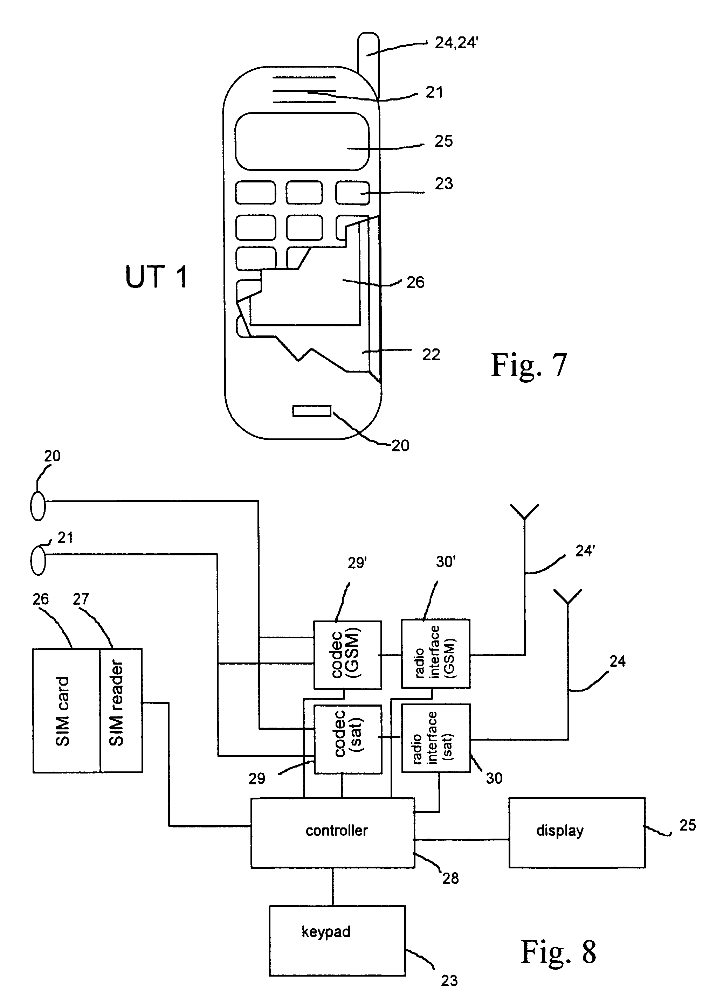

The mobile user terminal UT 1 is shown in more detail in Figures 7 and 8. It comprises a hand held device which is generally similar to a mobile telephone used for conventional terrestrial GSM networks. It is powered by a rechargeable battery (not shown) and is configured to operate either with the local terrestrial cellular network or to roam to the satellite network. Thus, in the example shown in Figure 1, the mobile handset UT 1 can operate either according to a land-based GSM protocol or according to the satellite network protocol. As shown in Figure 5, the handset comprises a microphone 20, an earpiece 21, a battery 22, a keypad 23, antennas 24, 24' and a display 25. The handheld unit UT 1 also includes a subscriber identification module (SIM) smartcard 26. The circuit configuration of the handset UT 1 is shown in block diagrammatic form in Figure 8. The SIM card 26 is received in an SIM card reader 27 coupled to a controller 28, typically a microprocessor. The microphone and loudspeaker 20, 21 are coupled to first and second codecs 29, 29' coupled to conventional radio interfaces 30a, 30b connected to the antennas 24, 24' so as to transmit and receive communication signals, in a manner well known per se. The handset is capable of dual mode operation, with the codec 29, radio interface 30 and antenna 24 being used with the satellite network, and corresponding circuits 29', 30' and 24' being used with the GSM PLMN 9. Amongst other things, the controller 28 can monitor the quality of received signals from the satellite network, as will be explained in more detail later.

### Satellite base station (SBS 1)

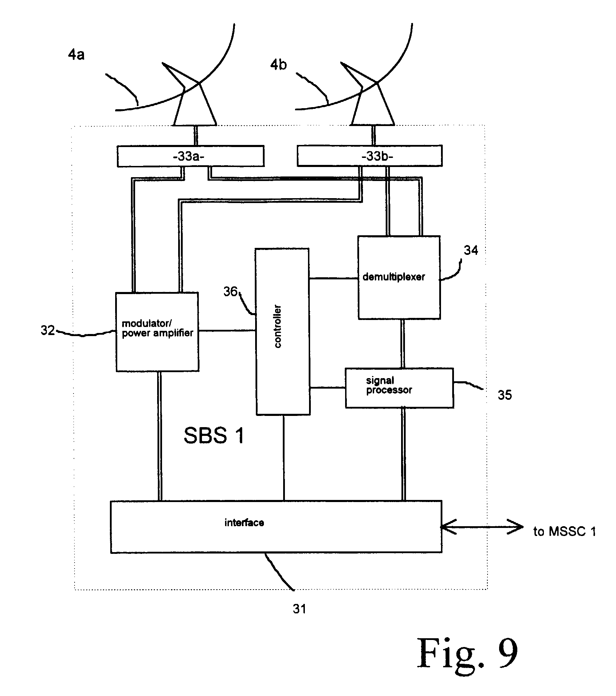

The configuration of the satellite base station SBS1 at SAN will now be described in more detail with reference to Figure 9. SBS1 comprises a network interface 31 providing an interface to MSSC 1, a modulator/power amplifier system 32, first and second feed units 33a, 33b for the dish antennas 4a, 4b, a de-multiplexer 34, a signal processing unit 35 and a controller 36. As previously explained, SAN 1 may include five dish antennas and the connections for only two of them are shown in Figure 7 in order to simplify the explanation.

The interface 31 receives communication signals from MSSC 1, routed from one of the various networks either through gateway GW 1 (Figure 1) or via the backbone network 5. The interface 31 reformats the signals for transmission to the UTs. Several calls are simultaneously supplied to the modulator/power amplifier system 32 and an interleaved TCH/SACCH is produced under the control of controller 36. A number of TCH/SACCHs are produced concurrently on different frequency bands and are fed to either one or both of the antennas 4a, 4b for onward downlink transmission via the satellites to individual user terminals. The feed units 33a, 33b feed the signals to the antennas 4a, 4b.

The antennas also receive uplink signals from the satellites and each feed unit 33a, 33b includes power combiners for combining the signals from the modulator/power amplification system 32 and a circulator for isolating the demultiplexer 34 from the combined signals and directing the combined signals to the respective antennas 4a, 4b.

Uplink signals received from the satellites are directed by the feed units 33a, 33b to the demultiplexer 34, which demultiplexes received uplink TCH/SACCHs and feeds the resulting signals via the signal processing unit 35 to the interface 31 for onward transmission to MSSC 1. The signal processing unit 35 extracts data from the received signals, which are fed to the controller 36 which in turn provides control data for UT1, which is modulated by modulator 32 onto signals transmitted to the UT, as will be described in more detail later.

### Service provision

The described network can provide service to subscribers in a number of different ways. For example, communication may be provided from UT 1 to UT 2 using the satellite backbone network 5. Alternatively, telephone communication can be established between the telephone set 7 and UT 1 either via SAN 1 and the satellite network, or, through PLMN 9, antenna 10 and link 11. For further description of service options, reference is directed to EP-A-0869628.

In the following, a telephone call established between telephone set 7 and UT1 through SAN 1 and satellite 3a will be considered in more detail.

### Radio link configuration

Referring to Figure 7, the TDMA frames which make up the TCH/SACCH, need to achieve synchronisation in order to achieve a satisfactory radio link between the SAN and UT 1. In the network described herein, link control is carried out referenced to each satellite, to ensure that integrity of the TDMA frame structure is maintained at the satellite, notwithstanding transmission delays to and from the satellite and Doppler shifts in frequency due to orbital motion of the satellite. It can be shown that choosing the satellite as the reference position reduces the overall complexity of the link control arrangements.

The issues associated with timing delays and Doppler shift will be considered in turn. Considering timing delays, for a terrestrial, cellular, mobile telephone network, the signal typically takes a few microseconds to travel from a base transmitter site antenna to a mobile station. Consequently, the transmitted TDMA time slot pattern is generally retained at the mobile station. A typical round trip delay for a 35km cell is of the order of ¼ slot. However, in a satellite mobile telephone system with the satellites 3a, 3b in a medium earth orbit, the time taken for signals to travel between a satellite 3a, 3b and a UT 1 is longer than a time slot. In the case of a satellite orbiting at 10355km, the one way propagation time to the satellite's nadir (where the satellite is seen at an elevation of 90° on the Earth) is approximately 34.5 ms, which is comparable with the previously described 40ms frame duration. This situation is further complicated by there being a significant difference between the path length to the cell at the nadir and the path lengths to the cells at the edge of the satellite's footprint. For a satellite orbiting at 10355km, the one way propagation time to a UT which sees the satellite at 0° elevation is approximately 51.6 ms. This leads to significant differences in the times at which bursts arrive at UTs and in the times when UTs are required to transmit in order for their signals to fit in with the TDMA frame structure at the satellite.

As previously mentioned, the up and downlink traffic channel signals are to be nominally synchronised in timing and carrier frequency at the satellite. In relation to timing synchronisation, this means that path delay variations on links to individual UTs need to be compensated as will now be explained.

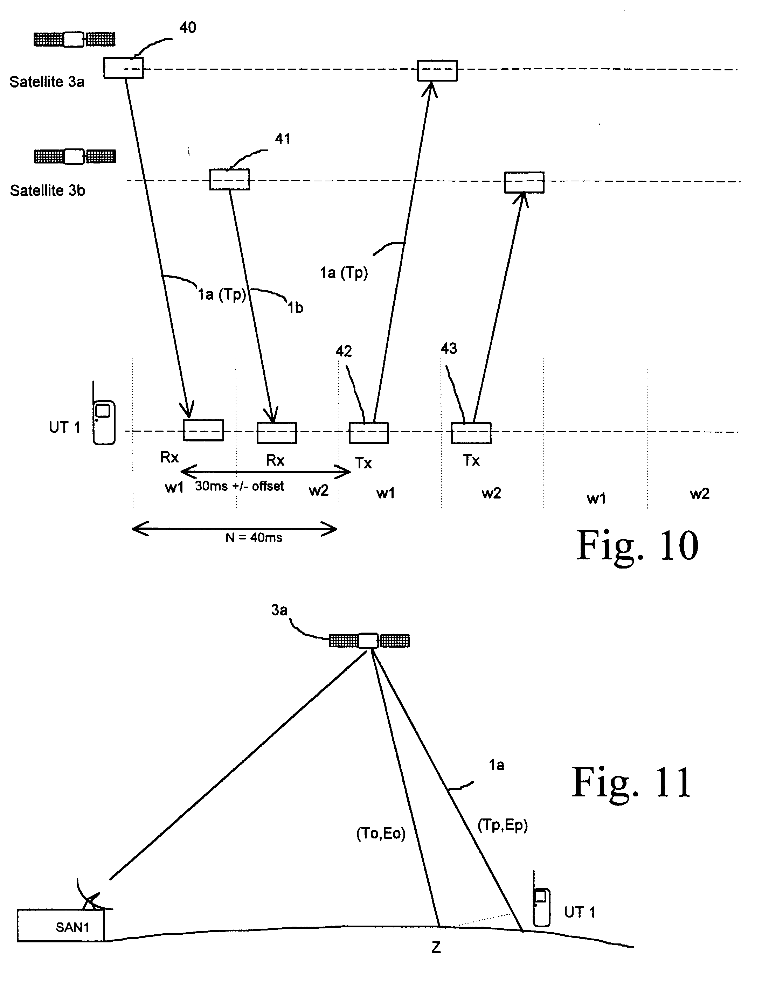

Referring to Figure 10, the transmission of successive downlink TDMA bursts 40, 41 from satellites 3a, b over paths 1a,b, to UT 1 is shown together with uplink bursts 42,43 from the UT to the satellites. The bursts in this example have a duration of 40/6ms (6.667ms) as previously discussed, and form part of the TCH/SACCH. At UT 1, each 40ms frame N is defined as two 20ms diversity windows w1, w2 for communication with the two satellites 3a,b. Considering the downlink burst 40 transmitted from satellite 3a, it is transmitted at a time determined by the synchronisation pattern that is maintained at satellite 3a, over path 1a to UT 1 and received within the 20ms reception window w1. A transmission delay $T_p$ occurs over the path 1a between the satellite 3a and UT 1. The user terminal UT 1 is configured to transmit an uplink burst 42 after a nominal, predetermined time delay D following reception of the downlink burst 40. The uplink burst 42 also is subject to the transmission delay $T_p$ as it travels to the satellite 3a. The time delay D needs to be selected so that the uplink burst 42 is received at the satellite 3a at a time which fits into the periodic pattern of the TDMA structure at the satellite 3a, order to maintain synchronisation at the satellite. In this example, the time delay D is nominally 30ms but is subject to an offset $\pm\Sigma_t$ to account for variations in location of the UT, as will be explained hereinafter.

Communication between the satellite 3b and the user terminal UT 1 occurs in a similar way. The downlink TDMA burst 41 is received in diversity window w2 at UT 1 from satellite 3b over path 1b and the uplink burst 43 is transmitted to the satellite 3b by the UT after

a delay $D\pm\Sigma_t$ so as to maintain synchronisation at the satellite 3b. Suitable values for $\Sigma_t$ for each satellite path are selected individually, as explained hereinafter.

Compensation to achieve the necessary synchronisation is carried out by referencing the timing for bursts transmitted on the path between the satellite and the UT to one of a number of different individual transmission delay values $T_o$ for which a zero offset $\Sigma_t$ is required . These different, individual transmission delay values map onto the surface of the Earth as arc-shaped contours Z shown in Figure 3. The location of the UT is considered in relation to one of these contours. When the UT is located on the contour, the timing delay corresponds to the individual value associated with the contour and the value of the timing offset $\Sigma_t$ needed is zero in order to maintain synchronisation of the uplink and downlink bursts at the satellite. When the UT is positioned away from the contour, a timing offset $\Sigma_t$ is needed relative to the value at the contour, to compensate for the longer transmission path length between the satellite and the UT. Since the arc-shaped contours Z of constant time delay require by definition, zero timing offset, the zero-offset arcs are referred to as Z-arcs.

In this example, each Z-arc delay value defines a path delay class which lies within +/- 1.4 ms of that value, so that 17 delay classes cover the 163 spot beams. Figure 3 shows Z-arcs $Z_n$ superimposed onto the spot beam types. Beam types 0 to 5, for example, have a path with delay variation of only 2.2 ms, and are therefore covered by a single Z-arc. In beam spots with more than one delay class, dotted arcs show the boundaries between delay classes.

The relationship between the timing offset $\Sigma_t$, the path delay $T_p$ to the UT and the delay $T_o$ associated with an individual Z-arc can be seen from Figure 11 which shows the transmission delays over the paths associated with the satellite 3a. It can be seen that the timing offset, when referenced to the Z-arc, is given by:

$$\Sigma_t = 2(T_p - T_o) \qquad (1)$$

The factor of two deals with the fact that compensation is needed for both the uplink and the downlink path between the UT and the satellite.

The offset $\Sigma_t$, which, in this example has a maximum value of +/- 1.4 ms, can be calculated by SBS 1 and periodically sent to UT 1. The SBS 1 knows the Z-arc value corresponding to the delay class to which the UT 1 has been allocated. It can determine the delay between itself and satellite 3a by sending and receiving loop-back transmissions. Other delays within the system can be measured or details obtained from the relevant equipment manufacturer, for example, in the case of satellite transponder delays, from the satellite manufacturer, and this information supplied to the SBS 1. Since the SBS 1 knows the various offsets (i.e. the delay D and others) applied by the UT between the received and transmitted bursts, it can use a received burst from the UT to calculate the actual path delay between the SBS and UT 1.

The way in which a UT is allocated a traffic channel will now be described. UT 1 first acquires system time and frequency from a BCCH. To initiate radio access, UT 1 transmits a formatted burst in a prescribed time slot on the RACH carrier frequency. SBS 1 searches for and acquires the UT RACH burst timing. As explained above, by knowing the received RACH time and various fixed offsets, the SBS can work out the actual path delay between the satellite 3a and the UT and therefore decide which Z-arc the UT should use, if the beam has more than one. The assignment of a traffic channel TCH/SACCH and initial pre-corrections are sent to the UT on the AGCH.

During the traffic exchange on the TCH/SACCH, SBS 1 pre-corrects the downlink frame timing of the bursts transmitted from the SAN 1 to the satellite so that the bursts, on arriving at the satellite, achieve the desired synchronisation pattern, that results in zero frame timing offset on Earth along the Z-arc. The UT locks to the corresponding received burst timing from the satellite 3a and pre-corrects and transmits its uplink burst 30ms +/- up to 1.4 ms later ($D \pm \Sigma_t$) so as to maintain nominally zero timing error at the satellite 3a. The SBS 1 periodically, for example, once per minute, sends new timing offsets to UT 1, based on continuing measurement of uplink burst timing at SBS 1. Thus referring to Figure 9, the signal processor 35 measures timing errors in the received uplink bursts and based on this information, the controller 36 periodically encodes updated values of $\Sigma_t$ in $SACCH_{down}$ using modulator 32 for transmission to UT 1.

A similar process occurs for the link established through satellite 3b, between SAN 1 and UT 1, for diversity operation. The bursts of the TCH/SACCH sent through satellite 3b are subject to a corresponding pre-compensation process in which SBS 1 computes timing offsets relative to a Z-arc appropriate for satellite 3b. The timing offsets are transmitted to UT 1 and used by it to pre-compensate uplink bursts of the TCH/SACCH routed through satellite 3b. Downlink bursts from the SAN to the satellite 3b are pre-corrected relative to the Z-arc for satellite 3b and also to maintain synchronism of the diversity windows w1, w2 at UT 1 for the satellites 3a, 3b. The periodic updating process will be described in more detail hereinafter.

As previously mentioned, a Doppler shift occurs in the frequency of the bursts transmitted between each satellite 3a,b and UT 1, which unless corrected, can result in bursts shifting in the frequency domain from one allocated slot to another. Compensation in the frequency domain is carried out by defining Z-arcs of zero Doppler frequency offset and performing compensation at UT 1 and at SBS 1 in the same manner as described herein for timing errors, but in respect of errors caused by Doppler shifts. Thus at SBS 1, a frequency pre-compensation and a frequency offset $\Sigma_d$ is computed relative to a Doppler Z-arc, where:

$$\Sigma_d = 2(E_d - E_o) \qquad (2)$$

$E_d$ is the Doppler shift for bursts on the path 1a between the satellite 3a and the UT 1, and $E_o$ is the Doppler shift to the Z-arc.

UT 1 thus applies to its transmitted bursts, a frequency shift $D_d$ and the frequency offset $\Sigma_d$ sent from the SBS in order to achieve frequency compensation, in an analogous manner to the timing compensation process, but in the frequency domain, for the path via satellite 3a, and a corresponding process is carried out for the path via satellite 3b.

## Diversity operation

As previously explained, a call established between SAN 1 and UT 1 can be routed via satellite 3a and satellite 3b over diverse paths 1a, 2a and 1b, 2b. The call can be routed over both paths concurrently to achieve diversity. This has the advantage that if one of the communications paths is subject to blockage or fading the other path can still provide good communication, thereby assuring a good signal quality.

The system described herein can operate in a number of different diversity modes: full diversity, partial diversity and switched diversity which will be considered in more detail hereinafter. The link control process is configured to allow frequency and timing compensation to be performed whichever diversity mode is selected

*Full diversity mode*

When in full diversity mode, a TCH/SACCH transmitted on the downlink from SAN 1 to UT 1 is concurrently transmitted over both of the paths 1a, 2a; 1b, 2b, both for the uplink and the downlink. Considering the downlink a $TCH/SACCH_{down}$ is formed in the SBS 1 by the modulator/power amplifier system 32. Alternate TDMA frames which make up the TCH/SACCH are directed to the antennas 4a, 4b respectively via feed units 33a, 33b. The antennas feed the signal bursts on different frequencies to the satellites 3a, 3b respectively.

Considering now operations at UT 1, TCH/$SACCH_{down}$ is received via the two satellites 3a, 3b in two frequency bands and the circuit shown in Figure 8 receives these signals on antenna 24 and feeds them to the radio interface 30. The codec 29 assembles the bursts received in the two different frequency bands into a signal train which is then converted into analog and fed to the earpiece 21.

The controller 28 measures the bit error rate (BER) individually for the received TDMA bursts for each of the paths 1a, 1b from the satellite 3a, 3b. Also, the controller 28 measures the Doppler shift $\delta f_a$, $\delta f_b$ in the signals received from the satellites 3a, 3b and calculates the difference between them $\Delta f = (\delta f_a - \delta f_b)$. Furthermore, the controller 28 detects any timing errors $\delta t_a$, $\delta t_b$ for the TDMA bursts received on each of the two paths 1a, 1b from the satellites and calculates the difference between them $\Delta t = (\delta t_a - \delta t_b)$. This link control data LD ($\Delta f$ & $\Delta t$) is encoded, using codec 29 of UT 1 (Figure 8) in the slow access channel $SACCF_{up}$ associated with the uplink $TCH_{up}$.

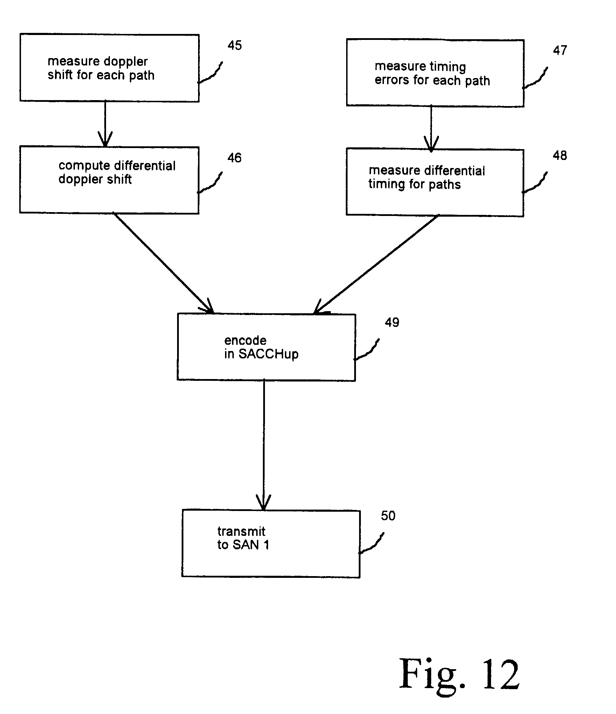

The process of forming the link control data is shown in Figure 12. At step 45, the Doppler shift $\delta f_a$, $\delta f_b$ in the signals received from the satellites 3a, 3b is measured by controller 28. At step 46, the difference $\Delta f = (\delta f_a - \delta f_b)$ is calculated. At step 47 , the controller 28 detects any timing errors $\delta t_a$ , $\delta t_b$ . At step 48, the controller 28 calculates the difference $\Delta t = (\delta t_a - \delta t_b)$. At step 49, the data $\Delta f$, $\Delta t$ = LD is encoded in $SACCH_{up}$ and is transmitted to SBS 1 at step 50.

In full diversity mode, the $TCH/SACCH_{up}$ is transmitted from UT 1 to SAN 1 via both satellites 3a, 3b and so the link control data in the $SACCH_{up}$ is received by the two dish antennas 4a, 4b and is directed to the demultiplexer 34 and signal processing unit 35.

As previously explained, the signal processor 35 monitors timing errors in the uplink bursts received via path 1a, 2a and based on this information, the controller 36 periodically instructs modulator 32 to send an updated value of the timing offset $\Sigma_t$ for path 1a (satellite 3a) to UT 1. A corresponding updating of the Doppler offset $\Sigma_d$ for path 1a is also carried out in a similar manner.

This updating process also needs to be carried out in respect of the timing offsets for path 1b (satellite 3b). Whilst it would be possible to monitor the two uplink paths via the two satellites 1a, 1b separately, in accordance with the invention, a different approach is taken. According to the invention, the link control data LD transmitted in $SACCH_{up}$ is received by the processor 35 and used to compute updated values of offsets for path 1b, based on the current value of the offsets $\Sigma_t$ , $\Sigma_d$ for path 1a and differential data $\Delta t = (\delta t_a - \delta t_b)$ and $\Delta f = (\delta f_a - \delta f_b)$.

For example, if the current value of the timing offset $\Sigma_t$ for path 1a is named $\Sigma_t$ (a) and the corresponding value for path 1b is named $\Sigma_t$ (b), then

$$\Sigma_t \ (b) = F \ (\Sigma_t \ (a), \ \Delta t) \qquad (3)$$

Similarly, for Doppler compensation

$$\Sigma_d \ (b) = F \ (\Sigma_d \ (a), \ \Delta f) \qquad (4)$$

The processor 35 thus computes updated values of $\Sigma_t$ (b), $\Sigma_d$ (b) on the basis of equations (3) and (4) together with the values of $\Sigma_t$ (a) and $\Sigma_d$ (a). Controller 36 periodically instructs modulator 32 to encode the updated values of $\Sigma_t$ (b), $\Sigma_d$ (b), $\Sigma_t$ (a) and $\Sigma_d$ (a) in $SACCH_{down}$ control parameter data for the UT, to be transmitted to UT 1. The advantage of this updating method is that it is possible to continue to perform the updating process with respect to path 1b when propagation conditions are such that either path 1a or 1b degrade the reception of bursts from satellite 3b such that the burst cannot be used for deriving timing offset control. This, and further advantages can be seen in relation to the following diversity modes:

*Partial diversity mode*

In this mode, the downlink channel TCH/SAC-$CH_{down}$ is transmitted to UT 1 from SAN 1 via both satellites 3a, 3b, as in the full diversity mode previously described. However for the uplink, $TCH/SACCH_{up}$ is transmitted via only one of the satellites 3a, 3b. This has the advantage of saving battery power at UT 1. The best uplink path is selected by consideration of the BER for the downlink channels individually, detected by controller 28 of UT 1 shown in Figure 8.

Thus the partial diversity mode, only one uplink path is available and so the uplink paths cannot be independently monitored at the SBS to update the offsets $\Sigma_t$ (a), $\Sigma_d$ (a) and $\Sigma_t$ (b), $\Sigma_d$ (b)

However, in accordance with the invention, UT 1 is configured to transmit link control data LD relating to both of the paths 1a, 1b, in one of the uplink paths to the SBS 1. Thus, for example if the path 1a through satellite 3a is selected for the partial diversity mode, the processor 35 at SBS 1 can monitor errors in the uplink and calculate the offsets $\Sigma_t$ (a), $\Sigma_d$ (a) accordingly. The values of $\Sigma_t$ (b) and $\Sigma_d$ (b) can then be calculated by the processor 35 according to equations (3) and (4) as previously described. Conversely, if satellite 3b is selected for the uplink, SBS 1 can monitor errors in this uplink and calculate the offsets $\Sigma_t$ (b), $\Sigma_d$ (b), from which $\Sigma_t$ (a) and $\Sigma_d$ (a) can be calculated using differential link data LD $\Delta t = (\delta t_a - \delta t_b)$ and $\Delta f = (\delta f_a - \delta f_b)$.

This arrangement thus has the advantage that link control data pertinent to both of the paths is determined by UT 1 and fed back on only one of the uplink paths via one satellite only. If the selected path for the uplink changes, no change is required to the configuration of the link control data which is configured to provide information about both of the paths and thus can be transmitted on either uplink path.

*Switched diversity mode*

In this mode, only one of the available paths 1a,2a; 1b,2b to the UT 1 from SAN 1 is utilised. However, if the received signal quality at the UT deteriorates, as measured in terms of BER (as previously described) the path is switched with a view to improving signal quality.

When the BER for the current downlink path drops below an acceptance threshold level, the controller 28 (Figure 6) sends an instruction in $SACCH_{up}$ for the SBS 1 to switch transmission to the alternative path.

In this mode, transmission may switch back and forth between the paths and so in order to provide link control, parameters of both of the paths need to be monitored, which gives rise to a problem due to the fact that only one of them is being used for $TCH/SACCH_{down}$. However, as previously explained, for each cell C (shown in Figure 6), a BCCH is transmitted by the relevant satellite 3, which comprises a sequence of TDMA bursts at a pre-defined BCCH frequency. In accordance with the invention, link control is performed by monitoring the parameters of $TCH/SACCH_{down}$ for the one path used for the downlink e.g. the path via satellite 3a. For the other of the paths e.g. via satellite 3b, for which no $TCH/SACCH_{down}$ is being transmitted, the characteristics of the BCCH transmitted over the path is monitored at UT 1. Thus, the previously described parameters $\Delta t$ and $\Delta f$ can be calculated as shown in Figure 12, by measuring the characteristics of $TCH/SACCH_{down}$ and BCCH for the paths via the two satellites 3a, 3b respectively.

The resulting values of $\Delta f$ and $\Delta t$ are encoded in $SACCH_{up}$ as previously described so that they can be transmitted back to the SBS1 for use in link control.

Whilst the switching between paths is carried out on the basis of BER, it will be understood that other received signal parameters can be used such as received signal power.

*Penetration control*

The ICO™ network permits downlink transmissions to be made so as to achieve three different levels of penetration - high penetration (HPN), medium penetration (MP) and nominal penetration (NP). This is described in more detail in WO98/23045. HPN can be used to page a user terminal when it is shielded for example by a building in order to leave a message for the user that a call attempt is being made. The MP mode can be used to transmit signalling channels and paging services. Nominal penetration is used for speech channels usually under conditions of line of sight.

A situation can occur in which one of the two, diverse downlink paths via satellite 3a or 3b is providing $TCH/SACCH_{down}$ in MP mode and the other is in NP mode. It will be understood that the link control techniques previously described for full and partial diversity would not work due to the disparate power levels associated with MP and NP modes. This can be overcome in accordance with the invention by comparing the MP mode channel transmitted via one of the downlink paths, with a BCCH transmission for the other path. The BCCH transmissions are in MP mode and thus have a similar power level, permitting values of $\Delta f$ and $\Delta t$ to be computed as previously described with reference to Figure 12.

Many modifications and variations fall within the scope of the invention. For example, although the method of link control has been described in relation to the ICO™ system, it will be appreciated that it could be equally well applied to any of the satellite mobile telecommunications networks described in Scientific American *supra.* The technique could also be applied to a conventional land-based mobile telephone network, in which the diverse paths are provided by more than one cellular transmitter, such as transmitter 10 shown in Figure 1. Also, whilst the user terminals UT have been described as mobile telephone handsets, it will be understood that they may be semi-mobile e.g. mounted on a ship or aircraft and may actually be stationary during operation.

Also, the control parameter data can be configured in different ways to the previously described example of $\Delta f$ and $\Delta t$ and instead of forming these differential values from $\delta t_a, \delta t_b$ and $\delta f_a, \delta f_b$, the individual values themselves could be transmitted in SACCH on the uplink to SBS 1 for use in computing offsets for transmission to UT 1.

Further, it will be understood that link control can be carried out independently for each path 1a, 1b whilst both are in use, but in the event that one of them can no longer be used for link control, the system can switch over to use the differential link data (LD) as previously described in accordance with the invention.

The described examples of diversity operation use two transmission paths, such that full diversity comprises two out of the two paths, and partial diversity and switched diversity use one out of the two paths. However, more paths can be used, i.e. three or more. Thus, the diversity modes can be generalised to include m paths with an optional selection of n paths where m>n. It will be understood that the invention can also be applied to this generalised configuration.

**Claims**

1.  A method of performing link control in a mobile telecommunications system wherein telecommunications traffic is transmitted to a user terminal from a ground network in a traffic logical channel over diverse paths, comprising

    measuring at the user terminal a transmission parameter for the traffic channel transmitted thereto over one of the paths;
    measuring at the user terminal a transmission parameter for another of the paths, forming a transmission parameter signal containing transmission parameter data based on both of the transmission parameter measurements;
    transmitting the transmission parameter signal to the ground network through at least one of the paths;

deriving at the ground network, control parameter data for controlling characteristics of signals transmitted by the user terminal for the two paths individually, as a function of the transmission parameter data received at the ground network in the transmission parameter signal; and transmitting the control parameter data to the user terminal from the ground network, whereby characteristics of signals transmitted by the user terminal in the two paths is controllable in accordance with the control parameter data.

2.  A method according to claim 1 wherein the forming of the transmission parameter signal includes forming a signal corresponding to the difference between the transmission parameter measurements for the individual paths.

3.  A method according to claim 1 or 2 wherein said measuring includes measuring timing errors in the signals received by the user terminal in the two paths individually.

4.  A method according to any preceding claim wherein said measuring includes measuring Doppler shifts in the signals received by the user terminals in the two paths individually.

5.  A method according to any preceding claim wherein telecommunications traffic is transmitted from the user terminal to the ground network in a traffic channel having an associated control channel, the method including transmitting the transmission parameter signal in the control channel.

6.  A method according to any preceding claim including measuring characteristics of signals received by the ground network from the user terminal, and deriving said control parameter data as a function of said transmission parameter data and said measured error characteristics.

7.  A method according to any preceding claim wherein the mobile telecommunications system comprises a satellite system and the diverse paths for the logical channel pass through different satellites to the user terminal.

8.  A method according to claim 7 wherein the diverse paths are in different cellular areas served by the different satellites with individual cell broadcast signals, and the system is selectively operable in a switched diversity mode in which the ground network transmits the logical traffic channel in a downlink to the user terminal over one of the paths and switches the channel between the paths in response to data received from the user terminal as to the path of higher transmission quality, including measuring at the user terminal a transmission parameter for the traffic channel transmitted thereto over one of the paths, and measuring at the user terminal a transmission parameter for another of the paths which is not transmitting the logical channel, by measuring characteristics of the cell broadcast signal for the cell that includes said other path.

9.  A method according to claim 7 or 8 wherein the system is selectively operable in a partial diversity mode in which the ground network transmits the logical traffic channel in a downlink to the user terminal over the diverse paths and the user terminal communicates with the ground network through an uplink over a selected one of the paths, the path for the uplink being selected in dependence on the received signal quality of the downlink paths.

10. A method according to claim 7, 8 or 9 wherein the system is selectively operable in a full diversity mode in which the ground network transmits the logical traffic channel in a downlink to the user terminal over the diverse paths and the user terminal communicates with the ground network through an uplink over the diverse paths.

11. A method according to any one of claims 7 to 10 wherein the logical traffic channel is selectively transmissible to achieve relatively high and low levels of penetration at the user terminal, and the diverse paths are in different cellular areas served by the different satellites with individual cell broadcast signals for achieving the relatively high level of penetration, the method including, when downlink is configured to achieve the high level of penetration in one of the paths, measuring the parameters of the broadcast signal for the cell that includes the other of the paths.

12. A method of operating a user terminal to provide link control in a cellular satellite mobile telecommunications system wherein telecommunications traffic is transmitted to a user terminal from a ground network in a traffic logical channel over diverse paths through different satellites, the method comprising:

measuring at the user terminal a transmission parameter for the traffic channel transmitted thereto over one of the paths;
measuring at the user terminal a transmission parameter for another of the paths, forming a transmission parameter signal containing transmission parameter data based on both of the transmission parameter measurements;
transmitting the transmission parameter signal to the ground network through at least one of the paths;

receiving from the ground network, control parameter data for controlling characteristics of signals transmitted by the user terminal for the two paths individually, derived at the ground network as a function of the transmission parameter data received at the ground network in the transmission parameter signal; and

controlling characteristics of signals transmitted by the user terminal in accordance with the control parameter data received by the user terminal.

13. A method of operating a ground network to provide link control in a cellular satellite mobile telecommunications system wherein telecommunications traffic is transmitted to a user terminal from the ground network in a traffic logical channel over diverse paths through different satellites to a user terminal at which a transmission parameter for the traffic channel transmitted thereto over one of the paths and a transmission parameter for another of the paths are measured and a transmission parameter signal containing transmission parameter data based on both the transmission parameter measurements is produced and transmitted to the ground network through at least one of the paths, the method including: deriving control parameter data for controlling characteristics of signals transmitted by the user terminal for the two paths individually, as a function of the transmission parameter data received at the ground station in the transmission parameter signal; and

transmitting the control parameter data to the user terminal from the ground network, whereby characteristics of signals transmitted by the user terminal in the two paths may be controlled in accordance with the control parameter data.

14. A user terminal operable to provide link control in a cellular satellite mobile telecommunications system wherein telecommunications traffic is transmitted to the user terminal from a ground network in a traffic logical channel over diverse paths through different satellites, comprising:

means to measure a transmission parameter for a traffic channel transmitted thereto over one of the paths;

means to measure a transmission parameter for another of the paths,

means to form a transmission parameter signal containing transmission parameter data based on both of the transmission parameter measurements;

means for transmitting the transmission parameter signal to the ground network through at least one of the paths;

means to receive from the ground network, control parameter data for controlling characteristics of signals transmitted by the user terminal for the two paths individually, derived at the ground network as a function of the transmission parameter data received in the transmission parameter signal; and

means for controlling characteristics of signals transmitted by the user terminal in accordance with the control parameter data received by the user terminal.

15. A ground network to provide link control in a cellular satellite mobile telecommunications system wherein telecommunications traffic is transmitted to a user terminal from the ground network in a traffic logical channel over diverse paths through different satellites to a user terminal at which a transmission parameter for the traffic channel transmitted thereto over one of the paths and a transmission parameter for another of the paths are measured and a transmission parameter signal containing transmission parameter data based on both the transmission parameter measurements is produced and transmitted to the ground network through one of the paths, the network including:

a receiver to receive the transmission parameter signal from one of the paths;

a processor for deriving control parameter data for controlling characteristics of signals transmitted by the user terminal for the two paths individually, as a function of the transmission parameter data received in the transmission parameter signal; and

a transmitter to transmit the control parameter data to the user terminal from the ground network, whereby characteristics of signals transmitted by the user terminal in the two paths may be controlled in accordance with the control parameter data.

Fig. 1

163 SPOT BEAMS COVERING DOWN TO 0 DEG ELEVATION

Figure 2

EP 1 021 002 A1

Z-ARCS AND SPOT SHAPES ON EARTH BY BEAM TYPE (163 BEAMS, 10,355 KM.)

Figure 3

frequency

25kHz

BP
40/6 ms

time

slot

# Fig. 4

17

19 down

18

16

detector
multiplexer/demultiplexer

beam processor

19 up

beam processor

# Fig. 5

Fig. 6

UT 1

Fig. 7

24,24'
21
25
23
26
22
20

| | | | |
|---|---|---|---|
| SIM card | SIM reader | codec (GSM) | radio interface (GSM) |
| | | codec (sat) | radio interface (sat) |

20
21
26
27
29'
30'
24'
24
29
30
controller
display
25
28
keypad
23

Fig. 8

Fig. 9

Fig. 10

Fig. 11

measure doppler
shift for each path
45

measure timing
errors for each path
47

compute differential
doppler shift
46

measure differential
timing for paths
48

encode
in SACCHup
49

transmit
to SAN 1
50

Fig. 12

EP 1 021 002 A1

**European Patent Office**

**EUROPEAN SEARCH REPORT**

Application Number

EP 99 30 0191

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 796 760 A (WIEDEMAN ROBERT A ET AL) 18 August 1998 (1998-08-18) <br> * abstract * <br> * column 2, line 62 - column 3, line 43 * <br> * column 5, line 40 - column 6, line 17 * <br> * column 12, line 43-54 * <br> * column 13, line 1 - column 15, line 4 * <br> * figures 1A,1B * <br> * claims 1-3 * | 1,7,8, 10,12-15 | H04B7/185 H04B7/08 |
| A | EP 0 837 568 A (ICO SERVICES LTD) 22 April 1998 (1998-04-22) <br> * abstract * <br> * column 1, line 3-18 * <br> * column 1, line 48 - column 2, line 4 * <br> * column 2, line 30 - column 3, line 1 * <br> * column 3, line 12 - column 4, line 2 * <br> * column 8, line 25 - column 9, line 22 * <br> * figure 1 * <br> * claims * | 1,7-9, 12-15 | |
| A | WO 96 21998 A (NOKIA TELECOMMUNICATIONS OY ;POSTI HARRI (FI)) 18 July 1996 (1996-07-18) <br> * abstract * <br> * page 4, line 15 - page 5, line 30 * <br> * page 8, line 22-31 * <br> * claims * | 1,5, 12-15 | TECHNICAL FIELDS SEARCHED (Int.Cl.7) <br><br> H04B |
| A | US 5 561 838 A (CHANDOS RONALD V ET AL) 1 October 1996 (1996-10-01) <br> * abstract * <br> * column 4, line 52-62 * <br> * column 5, line 54 - column 6, line 9 * <br> * column 6, line 44 - column 7, line 14 * <br> * column 7, line 54 - column 8, line 39 * <br> * figure 6 * | 1,3,4, 12-15 | |

The present search report has been drawn up for all claims

| Place of search | Date of completion of the search | Examiner |
|---|---|---|
| THE HAGUE | 12 August 1999 | Dejonghe, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

**ANNEX TO THE EUROPEAN SEARCH REPORT
ON EUROPEAN PATENT APPLICATION NO.**                 EP 99 30 0191

12-08-1999

| Patent document cited in search report | | Publication date | Patent family member(s) | | Publication date |
|---|---|---|---|---|---|
| US 5796760 | A | 18-08-1998 | US | 5859874 A | 12-01-1999 |
| | | | AU | 681720 B | 04-09-1997 |
| | | | AU | 8049494 A | 16-11-1995 |
| | | | BR | 9500364 A | 05-12-1995 |
| | | | CA | 2138858 A | 10-11-1995 |
| | | | EP | 0682416 A | 15-11-1995 |
| | | | JP | 7321722 A | 08-12-1995 |
| EP 0837568 | A | 22-04-1998 | GB | 2318482 A | 22-04-1998 |
| | | | JP | 10190546 A | 21-07-1998 |
| WO 9621998 | A | 18-07-1996 | FI | 950047 A | 05-07-1996 |
| | | | AU | 700052 B | 17-12-1998 |
| | | | AU | 4348796 A | 31-07-1996 |
| | | | CN | 1168214 A | 17-12-1997 |
| | | | EP | 0801872 A | 22-10-1997 |
| | | | NO | 973094 A | 03-09-1997 |
| US 5561838 | A | 01-10-1996 | NONE | | |

EPO FORM P0459